# EUROPÄISCHE PATENTSCHRIFT

(11) **EP 1 627 535 B1**
(45) Veröffentlichungstag und Bekanntmachung des Hinweises auf die Patenterteilung: **28.11.2012**
(21) Anmeldenummer: 04739295.6
(22) Anmeldetag: 21.05.2004
(51) Int. Cl.: H04N 13/04

(54) **VERFAHREN UND VORRICHTUNG ZUR DREIDIMENSIONALEN DARSTELLUNG VON BILDERN**
METHOD AND DEVICE FOR THREE-DIMENSIONALLY DEPICTING IMAGES
PROCEDE ET DISPOSITIF DE REPRESENTATION TRIDIMENSIONNELLE D'IMAGES

(30) Priorität: 23.05.2003 DE 10323462
(43) Veröffentlichungstag der Anmeldung: 22.02.2006
(73) Patentinhaber: Boll, Peter, 82362 Weilheim (DE)
(72) Erfinder: Boll, Peter, 82362 Weilheim (DE)
(74) Vertreter: Reitstötter - Kinzebach
(86) Internationale Anmeldenummer: PCT/EP2004/005509
(87) Internationale Veröffentlichungsnummer: WO 2004/105403

(56) Entgegenhaltungen:
- EP-A- 1 302 812
- US-B1- 6 302 542

## Beschreibung

Die Erfindung betrifft ein Verfahren und eine Vorrichtung zur dreidimensionalen Darstellung von Bildern, insbesondere zur Darstellung von computergenerierten Bildern.

In vielen Bereichen von Wissenschaft, Technik und Unterhaltung werden heutzutage Bilder, Bildabfolgen oder Filme auf zweidimensionalen Flächen, beispielsweise den Bildschirmen von Computermonitoren oder von Fernsehgeräten dargestellt. Räumliche Tiefe kann bei derartigen zweidimensionalen Darstellungen lediglich durch Perspektivdarstellungen simuliert werden.

In vielen Bereichen besteht daher ein Bedürfnis, räumliche Gegenstände als echte dreidimensionale Bilder darzustellen, die beispielsweise auch aus unterschiedlichen Richtungen betrachtet werden können und daher gegenüber der rein zweidimensionalen Darstellung einen wesentlich höheren Informationsgehalt besitzen. Echte dreidimensionale Bilder bieten daher nicht nur einen realistischeren visuellen Eindruck bei Filmen oder Videospielen, sondern können insbesondere auch in Wissenschaft und Technik vorteilhaft eingesetzt werden. Beispielhaft seien die dreidimensionale Darstellung komplexer Proteinstrukturen oder die dreidimensionale Darstellung von Organen oder ganzen Körperarealen, die aus durch Kernspin- oder Computertomographie gewonnenen Daten errechnet werden, genannt. Als weiteres Beispiel sei die dreidimensionale Darstellung von Radarbildern genannt, die im Gegensatz zur üblichen zweidimensionalen Darstellung eine entscheidende Verbesserung der Sicherheit mit sich bringt, da Höheninformationen unmittelbar visuell sichtbar sind und nicht mehr durch Zahlencodes in der zweidimensionalen Darstellung codiert werden müssen.

Es sind inzwischen zahlreiche Verfahren und Vorrichtungen bekannt geworden, die dem Betrachter einen dreidimensionalen Bildeindruck vermitteln sollen. Gemäß einem weit verbreiteten Verfahren versucht man, den durch das binokulare Sehen des Menschen hervorgerufenen dreidimensionalen Eindruck der Umgebung durch technische Hilfsmittel zu simulieren. Dabei werden zwei Bilder, die leicht gegeneinander versetzten Blickrichtungen entsprechen und beispielsweise durch Stereofotographie aufgenommen oder per Computer erzeugt wurden, auf einen Schirm projiziert. Mit geeigneten Hilfsmitteln wie Polarisations- oder Farbfilterbrillen wird sichergestellt, dass der Betrachter mit jedem Auge nur eines der beiden Bilder sieht. Der so simulierte dreidimensionale Effekt vermittelt dem Betrachter über die räumliche Tiefe hinaus keine zusätzlichen Informationen. So ist es dem Betrachter beispielsweise nicht möglich, die dargestellte Szenerie durch eine Veränderung seiner Position aus einem neuen Blickwinkel zu betrachten.

Außerdem wird die Notwendigkeit, spezielle Brillen zu tragen, von vielen Nutzern als störend empfunden.

Ohne solche Hilfsmittel kommen Rasterbildwände aus, bei denen der Betrachter bei einem bestimmten Abstand mit einem Auge jeweils nur die zum Links- oder Rechtsbild gehörenden Bildstreifen sieht. Auch hier ist dem Betrachter keine Positionsveränderung möglich.

In dem US-Patent US 6,005,608 wird eine dreidimensionale Anzeigevorrichtung beschrieben, welche die Darstellung von echten dreidimensionalen Bildern ermöglicht, die vom Betrachter ohne spezielle Hilfsmittel, wie Polarisations- oder Farbfilterbrillen wahrgenommen werden können. Dabei wird das zweidimensionale Bild einer Bildröhre auf einen senkrecht zur Bildebene der Bildröhre bewegten Schirm projiziert. Die Abmessungen der zweidimensionalen Bildquelle entsprechen dabei der Länge und Breite des dargestellten Volumens, während die Bewegungsamplitude des Schirms senkrecht zu dieser Ebene der Tiefe des dargestellten Volumens entspricht. Die zu jedem Zeitpunkt durch die Bildröhre erzeugten Konturen des darzustellenden dreidimensionalen Bildes werden mit der momentanen räumlichen Position des Schirms synchronisiert. Ein solches Abbildungssystem ist jedoch sehr lichtschwach, da die Projektion von der Bildröhre auf den Schirm über eine Lochmaske erfolgt, und kann daher nur bei geringem Umgebungslicht betrieben werden.

Auf einem ähnlichen Prinzip basiert das von der amerikanischen Firma Actuality Systems angebotene und beispielsweise in der internationalen Patentanmeldung WO 02/21851 beschriebene 3-D-Bildschirmsystem, bei dem ein Lichtstrahl über eine Scanner-Optik auf einen rotierenden Schirm projiziert wird. Der 3-D-Bildschirm der Firma Actuality Systems ist auf Grund der aufwändigen Mechanik sehr schwer und teuer. Durch die Ablenkung eines einzelnen Lichtstrahls zur Bilderzeugung ist das resultierende Bild zudem sehr lichtschwach und kann nur in abgedunkelten Räumen betrachtet werden.

In der japanischen Patentanmeldung JP 56-113116 A wird eine Vorrichtung zur dreidimensionalen Darstellung von Bildern beschrieben. Gemäß diesem Dokument werden zweidimensionale Einzelbilder über eine zusammen mit einem Schirm periodisch hin- und her bewegte Abbildungseinrichtung auf den Schirm projiziert. Mit dieser bekannten Vorrichtung kann das dreidimensional Bild jedoch lediglich mit vier unterschiedliche Einzelbilder aufgebaut werden, die durch vier separate Projektoren auf den Schirm projiziert werden, wobei der jeweils aktive Projektor über Schalter gesteuert wird, die in Abhängigkeit von der momentanen Lage der Abbildungslinse betätigt werden. Da die Tiefeninformation auf lediglich vier unterschiedliche zweidimensionale Einzelbilder beschränkt ist, ist die Qualität der räumlichen Darstellung nicht zufriedenstellend. Eine Änderung der zweidimensionalen Bildinformation oder gar die dreidimensionale Darstellung von bewegten Szenerien ist mit dieser Vorrichtung nicht möglich. Außerdem führt die Abbildung eines zweidimensionalen Einzelbildes auf einen Schirm mittels eines Projektors zu deutlichen Einschränkungen im Hinblick auf den Betrachtungswinkel, unter dem die Abbildung auf dem Schirm noch in ausreichender Helligkeit wahrgenommen werden kann. In jedem Fall kann man unter Berücksichtigung der Leistungsfähigkeit der herkömmlichen Projektoren davon ausgehen, dass zur Beobachtung des Bildes eine weitgehende Verdunkelung des Raumes notwendig sein wird.

Auch in der japanischen Patentanmeldung JP 57-062020 A wird eine Vorrichtung zur Erzeugung von dreidimensionalen Bildern beschrieben. Gemäß diesem Dokument erfolgt die Bilderzeugung durch Hin- und Herbewegen eines Arrays aus lichtemittierende Dioden (LED-Array). Bei der beschriebenen Vorrichtung müssen das gesamte Array zusammen mit der Schaltungselektronik zur Ansteuerung des Arrays bewegt werden, so dass hohe Kräfte auf das Array selbst, den Antrieb und die mechanische Führung wirken.

Die japanischen Patentanmeldung JP 07-33546 A beschreibt eine weitere Vorrichtung zur Erzeugung dreidimensionaler Bilder. Bei der dort beschriebenen Vorrichtung erfolgt die Bilderzeugung durch drei versetzt zueinander angeordnete lineare LED-Arrays, wobei der Versatz der drei linearen Arrays die maximal mögliche Bildtiefe festlegt. Durch Bewegen eines Spiegels werden aus den drei in der Tiefe gestaffelten Bildlinien jeweils drei flächige Bilder erzeugt. Auch bei dieser Vorrichtung stehen dem Betrachter nur eine sehr begrenzte Anzahl von Tiefeninformationen zur Verfügung, so dass von einer echten dreidimensionalen Bilderzeugung keine Rede sein kann.

In dem US-Patent US 6302542 wird ein Verfahren und eine Vorrichtung zur dreidimensionalen Darstellung von Bildern beschrieben, wobei man eine Abfolge von zweidimensionalen Einzelbildern mittels eines zweidimensionalen Arrays aus einzeln ansteuerbaren lichtemittierende Dioden (LEDs) erzeugt und das LED-Array mittels einer Abbildungseinrichtung auf einen Streuschirm abbildet. Der Streuschirm wird in einer im wesentlichen senkrecht zu der Schirmebene liegenden Richtung periodisch reversierend bewegt und die Abfolge der zweidimensionalen Einzelbilder mit der räumlichen Position des Streuschirms synchronisiert. Gemäß einer Ausführungsform umfasst die Abbildungseinrichtung einen beweglichen Spiegel, der mit halber Geschwindigkeit des Schirms bewegt wird.

In der europäischen Patentanmeldung EP 1 302 812 A2 wird ein Farbprojektor beschrieben, der mit mehreren LED-Arrays arbeitet.

Der vorliegenden Erfindung liegt daher das technische Problem zu Grunde, ein Verfahren und eine Vorrichtung zur dreidimensionalen Darstellung von Bildern, insbesondere zur dreidimensionalen Darstellung von veränderbaren Bildern, die wie ein echter Gegenstand aus verschiedenen Blickrichtungen betrachtet werden können, bereitzustellen, wobei die Bilder eine wesentlich höhere Intensität als bisher bekannte 3-D-Displays haben sollen. Die erfindungsgemäße Vorrichtung soll dabei zur Großserienherstellung geeignet und entsprechend kostengünstig herstellbar sein.

Gelöst wird das technische Problem durch das Verfahren gemäß vorliegendem Anspruch 1 und die Vorrichtung gemäß Anspruch 4. Vorteilhafte Weiterbildungen des erfindungsgemäßen Verfahrens sind Gegenstand der abhängigen Ansprüche.

Die Erfindung betrifft demnach ein Verfahren zur dreidimensionalen Darstellung von Bildern, wobei man eine Abfolge von zweidimensionalen Einzelbildern mittels eines zweidimensionalen Arrays aus einzeln ansteuerbaren lichtemittierende Dioden (LEDs) erzeugt, das von den LEDs des Arrays ausgehende Licht auf eine Abbildungseinrichtung bündelt, das auf die Abbildungseinrichtung auftreffende Licht auf einen Streuschirm fokussiert, wobei man die Abbildungseinrichtung und den Streuschirm miteinander gekoppelt in einer im wesentlichen senkrecht zu der Schirmebene liegenden Richtung periodisch reversierend bewegt und die Abfolge der zweidimensionalen Einzelbilder mit der räumlichen Position des Streuschirms synchronisiert.

Durch die Mitbewegung der Abbildungseinrichtung mit dem Schirm ist es möglich, dreidimensionale Bilder von besonders hoher Intensität zu erzeugen. Der Durchmesser der Abbildungseinrichtung, beispielsweise der Durchmesser einer als Abbildungseinrichtung verwendeten Linse, entspricht dabei vorteilhaft im Wesentlichen den Abmessungen der zu projizierenden zweidimensionalen Bilder. Im Gegensatz zu der in US 6,005,608 beschriebenen Vorrichtung ist beim Abbildungssystem der vorliegenden Erfindung keine die Intensität der Projektion drastisch einschränkende Lochblende (pin hole) erforderlich.

Die Abbildungseinrichtung und der Streuschirm werden als eine Einheit periodisch reversierend bewegt.

Gemäß des erfindungsgemäßen Verfahrens bleibt dabei der Abstand zwischen dem Streuschirm und der Abbildungseinrichtung, der praktisch der Bildweite des optischen Projektionssystems entspricht, im wesentlichen konstant. Da sich aber die Gegenstandsweite auf Grund der periodisch reversierenden Bewegung der Einheit aus Streuschirm und Abbildungseinrichtung ständig ändert, wird bei dieser Variante das zweidimensionale Bild bevorzugt verkleinert auf den Streuschirm projiziert, um die durch die sich ändernde Gegenstandsweite hervorgerufene Unschärfe der Abbildung zu minimieren. Vorteilhaft wird dabei eine Gegenstandsweite gewählt, die im Bereich des fünf- bis zehnfachen, vorzugsweise des sechs- bis achtfachen der Brennweite der optischen Abbildungseinrichtung liegt. Dadurch ändert sich bei einer Bewegung, die etwa in der Größenordnung der Brennweite der Abbildungseinrichtung oder etwas darunter liegt, die Bildweite nur wenig und die im Laufe einer Periode auftretenden minimalen Unschärfen fallen praktisch nicht ins Gewicht.

Erfindungsgemäß errechnet man die Abfolge der zweidimensionalen Einzelbilder aus den sichtbaren Oberflächendaten der darzustellenden dreidimensionalen Objekte. Dabei können gemäß einer Variante des erfindungsgemäßen Verfahrens alle aus unterschiedlichen Blickwinkeln sichtbaren Oberflächen projiziert werden. Bei dieser Variante sind aber beispielsweise Vorder- und Rückseite eines Gegenstands, bedingt durch die Trägheit des menschlichen Wahrnehmungssystems, praktisch gleichzeitig sichtbar. Bei bestimmten Anwendungen, beispielsweise bei der räumlichen Darstellung von Radardaten bei der Luftraumüberwachung, kann dieser Effekt durchaus gewünscht sein. Bei der Darstellung von realistischen dreidimensionalen Szenerien stört dieser Effekt in der Praxis nicht, denn Versuche mit Testpersonen haben gezeigt, dass selbst bei einer realitätsnahen Projektion von dreidimensionalen Gegenständen der betrachtete Gegenstand korrekt erfasst wird. Nur wenn die Testpersonen explizit darauf hingewiesen wurden, dass auch die normalerweise nicht sichtbare Rückseite zu sehen ist, gelang es den Testpersonen, den Blick auf die Rückseite des Gegenstandes zu fokussieren und auch diese bewusst wahrzunehmen. Falls erforderlich, kann, gemäß einer Variante des erfindungsgemäßen Verfahrens, die Position und der Blickwinkel des Betrachters bei der Berechnung der sichtbaren Oberflächen berücksichtigt werden, so dass jegliche optische Artefakte ausgeschlossen werden Können. In diesem Fall muss der Betrachter entweder einen vorgegebenen Blickwinkel im Wesentlichen beibehalten und das Objekt über eine geeignete Steuerungseinrichtung rechnerisch drehen, wenn er das Objekt aus unterschiedlichen Blickwinkeln betrachten will oder der 3-D-Monitor weist geeignete Mittel, wie beispielsweise Ultraschallsensoren, auf, die es ermöglichen, die momentane Position und damit die Blickrichtung des Beobachters zu erfassen und in die errechnete Darstellung mit einzubeziehen. Derartige zusätzlichen Maßnahmen werden aber nur in extremen Sonderfällen notwendig sein.

Gemäß einer besonders bevorzugten Variante des erfindungsgemäßen Verfahrens erzeugt man die Abfolge der zweidimensionalen Einzelbilder mittels eines Displays aus lichtemittierenden Dioden (LED), das als lineares Array oder als zweidimensionales Array ausgebildet sein kann. Der besondere Vorteil der Verwendung von LEDs ist darin zu sehen, dass durch die als Linse wirkende transparente Kapsel der LED praktisch das gesamte von der LED ausgehende Licht in einem schmalen Raumwinkel emittiert und durch die erfindungsgemäß vorgesehene Abbildungseinrichtung in einem Punkt auf dem Streuschirm fokussiert wird. Damit stößt man bei weit geringeren Kosten in Intensitätsbereiche vor, die ansonsten nur mit Lasern erreicht werden können.

Eine einfache Abschätzung zeigt, dass mit der erfindungsgemäßen Vorrichtung bei Verwendung eines zweidimensionalen aus kostengünstigen LEDs aufgebauten Displays wesentlich hellere dreidimensionale Bilder erzeugt werden können, als die von einem herkömmlichen Computerbildschirm erzeugten zweidimensionalen Bilder. Ein herkömmlicher Computerbildschirm hat in einem 0.1 mm² großen Pixel etwa die Leistung von 0.1 µW/mm², d.h. eine Gesamtleistung von ca. 1000*1000*0,1µW = 10mW, was anschaulich ca. 100 Lux Einstrahlung auf einem weißen Blatt entspricht. Bei einem 3-D-Monitor mit bewegtem Streuschirm ist, bei einer Auflösung von beispielsweise 500 Pixeln in der z-Achse (Tiefe), ein Pixel nur etwa 1/500 der Zeit aktiv. Bei 500 Pixeln in der z-Achse muss daher die Intensität der Lichtquelle schon 500*0.1µW/mm²=50µW/mm² betragen. Dies ist aber schon mit einfachen kostengünstigen LEDs möglich, wenn deren Gesamtleistung auf ein Pixel konzentriert wird. Schon einfache helle LEDs, die kostenmäßig im Cent-Bereich liegen, bringen eine Leistung von einige Zehntel mW und lassen sich zudem denkbar einfach ansteuern.

Wenn keine oder nur eine geringe Verkleinerung des LED-Displays verwirklicht werden soll, sind besonders kleine LEDs bevorzugt. Besonders bevorzugt ist das LED-Array dann als SMD (surface mounted) Array ausgebildet.

Gegenstand der Erfindung ist außerdem eine Vorrichtung zur dreidimensionalen Darstellung von Bildern, insbesondere ein mit einem Computer verbindbarer 3-D-Monitor.

Die erfindungsgemäße Vorrichtung umfasst Bilderzeugungsmittel zur Erzeugung einer Abfolge von zweidimensionalen Ausgangsbildern, auf wenigstens einem LED-Array, eine Abbildungseinrichtung und einen Streuschirm, die eine gekoppelte, bewegliche Einheit bilden, Betätigungsmittel zur periodischen Hin- und Herbewegung der Einheit in einer zu der Oberfläche des Streuschirms im Wesentlichen senkrechten Richtung, Steuerungsmittel zur Synchronisation der Abfolge der zweidimensionalen Ausgangsbilder mit der räumlichen Position des Streuschirms und schließlich sind Mittel vorgesehen, um das von den LED's des Arrays ausgehende Licht auf die Abbildungseinrichtung zu bündeln, die ihrerseits das auf sie auftreffende Licht auf den Streuschirm fokussiert. Die Bewegungsamplitude des Streuschirms senkrecht zu seiner ebenen Bildfläche bestimmt dabei die räumliche Tiefe des dargestellten dreidimensionalen Bildes. Die Steuerungsmittel steuern dabei die Abfolge der von den Bilderzeugungsmitteln wiedergegebenen Abfolge der zweidimensionalen Ausgangsbilder so, dass abhängig von der momentanen räumlichen Position des beweglichen Streuschirms Einzelbilder projiziert werden, die in ihrer Abfolge das gewünschte dreidimensionale Objekt darstellen.

Durch die Bewegung der Abbildungseinrichtung und des Streuschirms als gekoppelte Einheit bleibt die Bildweite der Abbildung im wesentlichen konstant. Wenn man also die zweidimensionalen Ausgangsbilder verkleinert auf den Streuschirm projiziert, d. h. wenn die Gegenstandsweite wesentlich größer als die doppelte Brennweite ist, so erhält man in dieser Anordnung über einen großen räumlichen Tiefenbereich eine scharfe und helle Abbildung.

Der bewegliche Streuschirm ist so gestaltet, dass er die projizierten Bilder möglichst gleichmäßig in einen möglichst großen Raumwinkelbereich streut, so dass die erzeugten dreidimensionalen Darstellungen vom Betrachter aus unterschiedlichen Blickwinkeln beobachtet werden können. Bei dem Schirm kann es sich beispielsweise um eine semitransparente Streuscheibe handeln. So kann etwa eine angeraute Scheibe aus einem transparenten Kunststoffmaterial, etwa aus einem Acrylglas (PMMA) wie z.B. PLEXIGLAS^{®}, oder eine dünne angeraute Glasplatte als Streuscheibe dienen.

Die Bilderzeugungsmittel sind so ausgestaltet, dass über die Abbildungseinrichtung eine Abfolge von zweidimensionalen. Ausgangsbildern auf den beweglichen Streuschirm projiziert werden kann. Dabei umfassen die Bilderzeugungsmittel vorzugsweise Mittel zur Darstellung von zweidimensionalen Ausgangsbildern, besonders bevorzugt ein zweidimensionales LED-Array. Die einzelnen LEDs des Arrays können über die Steuerungseinrichtung abhängig von der momentanen Position des beweglichen Streuschirms individuell aktiviert werden. Die Verwendung eines LED-Arrays ist besonders bevorzugt, da mit einem solchen Bilderzeugungsmittel besonders lichtstarke und kontrastreiche dreidimensionale Bilddarstellungen erzeugt werden können, so dass die dreidimensionalen Bilder beispielsweise auch ohne Abdunklung des Raums deutlich wahrgenommen werden können. Die LEDs weisen dabei eine möglichst enge Abstrahlcharakteristik auf, so dass praktisch das gesamte abgestrahlte Licht durch die Abbildungseinrichtung auf den beweglichen Schirm projiziert werden kann. Abhängig von der Größe des LED-Arrays kann es vorteilhaft sein, LEDs, die weiter vom Zentrum des Arrays entfernt sind, in Richtung der optischen Achse der Abbildungseinrichtung hin anzuwinkeln.

Gemäß einer Variante der erfindungsgemäßen Vorrichtung können die Bilderzeugungsmittel auch ein bewegliches lineares LED-Array umfassen, welches beispielsweise in der Bilderzeugungsebene mit hoher Frequenz oszillatorisch bewegt wird. Alternativ kann das lineare Array auch stationär sein, wobei dann beispielsweise über eine Anordnung aus kippbaren Spiegeln ein scheinbar zweidimensionales Ausgangsbild generiert wird.

Vorzugsweise ist das LED-Array so ausgebildet, dass Bilder in wenigstens drei unterschiedlichen Wellenlängen, vorzugsweise in den Primärfarben rot, grün und blau (RGB) erzeugt werden, was eine Farbdarstellung der dreidimensionalen Bilder ermöglicht. Dazu kann jedes Pixelelement des LED-Arrays aus drei unterschiedlich farbigen LEDs zusammengesetzt sein. Es sind jedoch auch schon Einzel-LEDs bekannt, die drei individuell schaltbare Kontakte aufweisen, welche die drei Primärfarben erzeugen.

Alternativ kann man auch drei separate LED-Arrays vorsehen, die bei drei verschiedenen Wellenlängen arbeiten und die über geeignete Spiegel, vorzugsweise über dichroitische Spiegel überlagert und so auf den Streuschirm projiziert werden.

Die Intensität des auf den Streuschirm projizierten Bildes, vorzugsweise die Intensität jedes einzelnen Pixels, wird über die Betriebsstromstärke und/oder ein einstellbares zeitliches Aktiv/Inaktiv-Verhältnis der LEDs geregelt.

Als Abbildungseinrichtung können unterschiedlichste optische Systeme eingesetzt werden, die es erlauben, das LED-Array auf den Streuschirm zu projizieren, d.h. insbesondere alle Arten von Linsensystemen. vorzugsweise wahlt man solche Linsen aus, die auch bei einem großen Durchmessen sehr leicht sind, so dass einerseits die zu bewegenden Massen gering sind, aber andererseits gewährleistet wird, dass möglichst viel Licht von dem LED-Array über das Linsensystem auf den Streuschirm gelangt. Die Abbildungseinrichtung umfasst besonders vorteilhaft eine Fresnel-Linse. Eine solche Linse ist auch bei großen Abmessungen leicht und kann kostengünstig nach spezifischen Anforderungen hergestellt werden.

Die erfindungsgemäße Vorrichtung zeichnet sich durch eine hohe Lichtstärke des erzeugten dreidimensionalen Bildes aus. Dazu ist erfindungsgemäß vorgesehen, dass praktisch das gesamte von den LEDs des Arrays erzeugte Licht auf die bewegliche Abbildungseinrichtung gebündelt wird. Die Mittel zur Bündelung des von den LEDs des Arrays ausgehenden Lichts auf die Abbildungseinrichtung können unterschiedlich gestaltet sein:
Gemäß einer ersten Variante sind die LEDs in einer transparenten Kunststoff- oder Glaskapsel eingeschlossen, die so ausgebildet ist, dass das von der LED erzeugte Licht, die Kapsel als ein nur schwach divergierender oder - im ldealfall - im Wesentlichen paralleler Lichtstrahl verlässt. Wenn die bewegten Abbildungseinrichtung, also beispielsweise die bewegte Fresnel-Linse, wenigstens gleich groß wie das LED Array ist, können die einzelnen LEDs des Arrays im Wesentlichen parallel zueinander angeordnet werden und strahlen somit ihre im Wesentlichen parallelen Lichtstrahlen genau in Richtung der beweglichen Fresnel-Linse ab.

Ist dagegen das LED Array größer als die Abbildungslinse, so kann man gemäß einer anderen Variante die LEDs des Arrays entsprechend ihrer Position im Array derart geneigt anordnen, dass beispielsweise auch die am äußeren Rand des Arrays befindlichen LEDs ihr Lichtbündel in Richtung der beweglichen Abbildungseinrichtung abstrahlen. Diese Variante ist fertigungstechnisch allerdings aufwändiger.

Daher kann man gemäß einer weiteren Variante vorsehen, unmittelbar vor dem LED-Array eine feststehende Sammeloptik, beispielsweise wiederum eine Fresnel-Linse, anzuordnen, welche die von den LEDs abgestrahlten parallelen Lichtstrahlen auf die bewegliche Abbildungseinrichtung bündelt.

Gemäß einer besonders bevorzugten Variante werden die LEDs der Arrays als SMD-Array ausgebildet. In diesem Fall kann man vorsehen, dass unmittelbar vor den LEDs des Arrays ein Mikrolinsen-Array angeordnet ist, welches wiederum dafür sorgt, dass das von den LEDs ausgestrahlte Licht auf die bewegliche Abbildungseinrichtung gebündelt wird.

Durch den Einsatz von Fresnel-Linsen in der beweglichen Abbildungseinrichtung und eines dünnen semitransparenten Streuschirms lassen sich die beweglichen Massen weitgehend reduzieren. Um die auftretenden Kräfte dennoch möglichst gut führen zu können, kann es vorteilhaft sein, die erfindungsgemäße Vorrichtung so anzuordnen, dass die Einheit aus Abbildungseinrichtung und Streuschirm im Wesentlichen in vertikaler Richtung hin- und her bewegt wird. In einer einfachen Variante ist dabei das LED-Array beispielsweise am Boden der Vorrichtung angeordnet und die optische Achse der Vorrichtung verläuft praktisch senkrecht zum Boden.

Man kann außerdem vorsehen, dass die bewegliche Einheit aus Abbildungseinrichtung und Streuschirm mit einem oder mehreren gegengleich bewegten Ausgleichskörpern gekoppelt ist. Eine solche Anordnung, die kinematisch mit dem Prinzip des Boxermotors vergleichbar ist, kann es so ausgebildet werden, dass sie nach außen hin praktisch kräftefrei ist, so dass Vibrationen und Geräuschentwicklung der erfindungsgemäßen Vorrichtung weitgehend minimiert werden können.

Auf Grund der beweglichen Teile ist es vorteilhaft, wenn zumindest der Streuschirm von einem Gehäuse oder zumindest einem zylinderförmigen Schutzring mit transparenten Wänden umgeben ist, so dass verhindert werden kann, dass Beobachter der dreidimensionalen Bilder versehentlich in den Bewegungsbereich des Schirms greifen. An den Wänden des Gehäuses können Filterfolien vorgesehen sein, die im sichtbaren Spektralbereich nur Licht mit solchen Wellenlängen transmittieren, wie es von den LEDs des Arrays erzeugt wird. Damit kann verhindert werden, dass Streulicht oder Reflektionen des Umgebungslichtes aus dem Genause nach außen aringen und das beobachtete dreidimensionale Bild verfälschen.

Besonders vorteilhaft umgibt das Gehäuse die gesamte bewegliche Einheit.

Vorteilhaft herrscht in dem Gehäuse herrscht gegenüber der Umgebung ein Unterdruck, d.h. das Gehäuse zumindest teilweise evakuiert. Dadurch können einerseits der Luftwiderstand, der während des Betriebs von der oszillierenden Einheit aus Abbildungseinrichtung und Streuschirm überwunden werden muss, verringert und andererseits die bei dieser Bewegung mechanisch verursachten Geräusche bzw. die Ausbreitung dieser Geräusche über Schallwellen nach draußen weitgehend unterdrückt werden.

Häufig wird man, wie oben angedeutet, das LED-Array verkleinert auf den Streuschirm abbilden. Wenn aber ein Abbildungsmaßstab von 1:1 realisiert wird, das heißt wenn das auf den Streuschirm projizierte Bild im Wesentlichen so groß wie das LED Array ist, ist es gemäß einer weiteren Variante der Erfindung möglich, mehrere erfindungsgemäße Vorrichtungen modulartig in einer Rasteranordnung zusammenzuschalten, um so ein Abbildungssystem für ein dreidimensionales Großbild zu realisieren. Die einzelnen Vorrichtungen des Abbildungssystems werden dann über einen Rechner so gesteuert, dass das zusammengesetzte Bild einer größeren Szenerie erzeugt werden kann, beispielsweise die dreidimensionale Abbildung eines Fußballfeldes oder einer Tennisplatzes mit einer dreidimensionalen Wiedergabe der Spielszenen in Echtzeit.

Die Erfindung wird im Folgenden unter Bezugnahme auf ein in der beigefügten Zeichnung dargestelltes Ausführungsbeispiel näher erläutert.

In der Zeichnung zeigt:
- Figur 1: eine schematische Darstellung einer Ausführungsform der erfindungsgemäßen Vorrichtung;
- Figur 2: eine vertikal orientierte Ausführungsform der erfindungsgemäßen Vorrichtung; und
- Figur 3: ein aus mehreren modulartig angeordneten erfindungsgemäßen Vorrichtungen zusammengesetztes .Abbildungssystem zur Erzeugung von dreidimensionalen Großbildern.

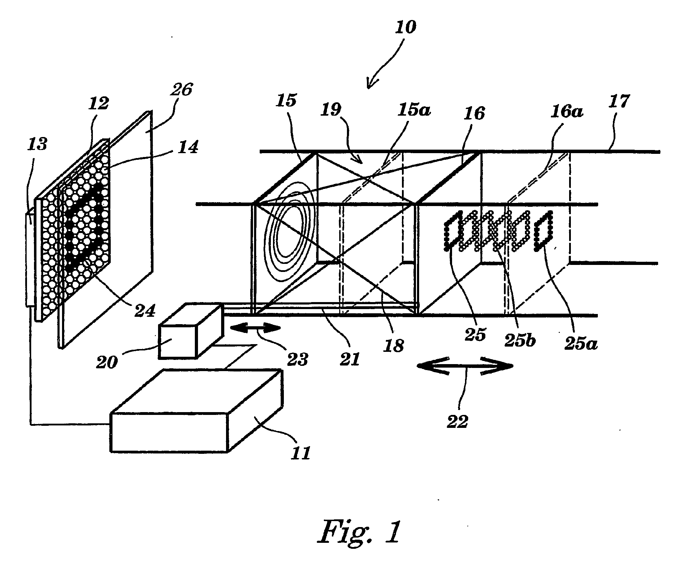

In Figur 1 ist eine bevorzugte Ausführungsform der erfindungsgemäßen Vorrichtung zur dreidimensionalen Darstellung von Bildern als 3-D-Monitor 10 gezeigt, der über einen Rechner 11 gesteuert wird. Der 3-D-Monitor 10 weist Bilderzeugungsmittel auf, die im dargestellten Beispiel von einem stationären zweidimensionalen LED-Array 12 mit zugehöriger Steuerungselektronik 13 gebildet werden. Die Steuerungselektronik 13 wird wiederum über den Controller 11 angesteuert, der beispielsweise über ein Interface, wie etwa eine USB-Schnittstelle, mit einem nicht dargestellten Rechner verbunden ist. Bei dem schematisch in der Zeichnung dargestellten Bauteil 11 kann es sich jedoch auch um einen Rechner mit integriertem Controller handeln. Jede LED-Zelle 14 des Arrays 12 kann Einzel-LEDs für die drei Primärfarben aufweisen oder ist vorzugsweise als integrierte LED ausgestaltet, welche als Einzelzelle aller drei Grundfarben wiedergeben kann. Die LED-Zellen 14 sind dabei so klein, dass keine oder nur eine geringe Verkleinerung bei der Abbildung des zweidimensionalen Ausgangsbildes notwendig ist, um hochauflösende und scharfe dreidimensionale Darstellungen zu erhalten. Beispielsweise lassen sich bei einer 3:1-Abbildung 600 x 600 herkömmliche, kostengünstige LED-Zellen 14 auf einer Fläche von 600 x 600 mm anordnen, was im Bild einer dann einer akzeptablen Pixelgröße von 0,3 mm x 0,3 mm entspricht.

Eine Abbildungseinrichtung, die als Fresnel-Linse 15 mit 200 mm Durchmesser realisiert ist, und ein semitransparenter Streuschirm 16 bilden eine über Führungsstangen 17 und Verbindungsmittel 18 gekoppelte Einheit 19, die über eine Motor- und Getriebeeinheit 20 mittels einer Schubstange 20 in periodische Bewegungen senkrecht zur Fläche des semitransparenten Streuschirms 16 versetzt wird, wie dies in Figur 1 durch den großen Pfeil 22 symbolisiert ist. Gegebenenfalls kann die Fresnel-Linse 15 oder der auch Streuschirm in jeder Halbperiode Korrekturbewegungen ausführen, um die sich ändernde Gegenstandsweite abhängig von der Position relativ zum Streuschirm 16 zu kompensieren, was in Figur 1 durch den kleinen Pfeil 23 symbolisiert ist. Auch die Korrekturbewegung der Linse 15 kann durch eine geeignete Ausgestaltung der Motor- und Getriebeeinheit 20 und gegebenenfalls eine weitere mit der Linse 15 gekoppelte (in Fig. 1 nicht dargestellte) Schubstange oder geeignete Zahnräder realisiert werden. Kleine Verzerrungen durch den unterschiedlichen Abbildungsmaßstab können rechnerisch beim Bildaufbau durch die Pixelwahl kompensiert werden.

Für einen 2-D-Bildaufbau stehen somit etwa 1/(22*600) sec, also etwa 76µsec zur Verfügung. Die aktiven Pixel werden als Positions- und Intensitätsdaten gebildet und übertragen. Die Datenmenge wird als Oberflächendaten der 3-D-Körper in etwa der eines zweidimensionalen Bildschirms mit allen Pixeln aktiv entsprechen. Entsprechend schnelle digitale Schnittstellen sind standardmäßig erhältlich. Für die Stromsteuerung durch die LEDs wird vorzugsweise ein spezieller Digital-analoger Baustein mit Latches und Stromeinstellung entwickelt. Vorzugsweise werden Linse 15 und Streuschirm 16 in einem leichten Vakuum bewegt, Linse und Mattscheibe sind dabei bevorzugt entspiegelt und der bilderzeugende Bereich bis auf die LEDs dunkel ausgekleidet und andere Wellenlängen als die der drei Grundfarben durch Filter geblockt, so dass auch starkes Umgebungslicht nur schwach von dem Streuschirm wiedergegeben wird.

Die Momentanposition der Einheit 19 kann beispielsweise aktiv über die Motor- und Getriebeeinheit 20 von der Steuerungseinrichtung 11 eingestellt werden. In diesem Fall kann beispielsweise ein ansteuerbarer Schrittmotor oder eine andere digital ansprechbare Stelleinrichtung eingesetzt werden. Besonders bevorzugt wird die Motor- und Getriebeeinheit 20 aber mit konstanter Drehzahl betrieben und die Momentanposition der Einheit 19 über einen linearen Wegaufnehmer oder einen Drehwinkelaufnehmer abgriffen, die dann über die Steuerungseinrichtung 11 ausgewertet werden kann. Letztere Variante stellt eine besonders kostengünstige Lösung dar.

im dargestellten Beispiel bewegt sich die Einheit 19 aus Fresnel-Linse 15 und semitransparentem Streuschirm 16 mit einer Frequenz von etwa 700 min⁻¹ und einer räumlichen Amplitude in Richtung der Führungsschienen 17 von 200 mm, so dass die Auflösung in dieser Richtung (z-Achse des entstehenden dreidimensionalen Bildes) ebenfalls bei 600 Punkten liegt. Der die Fresnel-Linse 15 und den semitransparenten Streuschirm 16 verbindende aus den Verbindungselementen 18 gebildete Käfig besteht vorzugsweise aus leichten und stabilen Kohlefasermaterialien. Eine solche Anordnung hält mechanischen Belastungen in der Größenordnung von 36 g problemlos stand. Linear-Schlittenführungen für die auftretenden Geschwindigkeiten von ca. 7 m/s sind ebenfalls kommerziell erhältlich.

In Figur 1 ist schematisch die Projektion eines dreidimensionalen, an seinen Stirnseiten offenen Quaders angedeutet. Das LED-Array erzeugt dabei ein leuchtendes Rechteck als zweidimensionales Ausgangsbild 24, das über die Linse 15 als Bild 25 auf den Streuschirm 16 projiziert wird. Durch die Motor- und Getriebeeinheit 20 wird die Einheit 19 aus Linse 15 und Streuschirm 16 periodisch hin- und herbewegt. Innerhalb dieser Amplitude der mechanische Schirmbewegung werden die dreidimensionalen Bilder zwischen der mit durchgehenden Linien dargestellten ersten Extremposition und der zweiten Extremposition, in welcher die Linse 15a und der Streuschirm 16a gestrichelt dargestellt sind, projiziert. In der zweiten Extremposition wird das Bild 25a auf den Streuschirm projiziert. Selbstverständlich entstehen auch zwischen den Extrempositionen entsprechende Projektionen 25b des Ausgangsbildes 24, von denen in Figur 1 lediglich vier exemplarisch angedeutet sind. Aus diesem einfachen Schema ist sofort ersichtlich, wie komplexe dreidimensionale Szenerien und bewegte dreidimensionale Bilder generiert werden können. Da der Steuerungseinrichtung 11 die räumliche Position des Streuschirms 16 in jedem Augenblick bekannt ist, kann beispielsweise ein an den Stirnseiten geschlosser Quader einfach dadurch erzeugt werden, dass an den Extrempositionen der Darstellung auf dem Streuschirms, also bei den in der Figur 1 durch die Bezugsziffern 16 und 16a angedeuteten Positionen, statt eines Quaderumrisses 24 ein gefüllter Quader durch das LED-Array 12 auf den Streuschirm projiziert wird.

Das LED-Array 12 Kann unmittelbar von der Beweglichen Fresnel-Linse 15 auf den Streunschirm 16 abgebildet werden. Dies ist besonders dann ohne wesentlichen Lichtverlust möglich, wenn die einzelnen LEDs 14 aufgrund ihrer Kapselung praktisch parallele Lichtstrahlen erzeugen. Typischerweise sind die von kommerziellen LEDs erhältlichen Lichtstrahlen aber mehr oder weniger divergent. Daher kann man, wie in Figur 1 ebenfalls angedeutet, ummittelbar vor dem LED-Array 12 eine stationäre Fresnel-Linse 26 anordnen, welche praktisch das gesamte, von den LEDs 14 des Arrays ausgehende Licht auf die bewegliche Fresnel-Linse 15 bündelt.

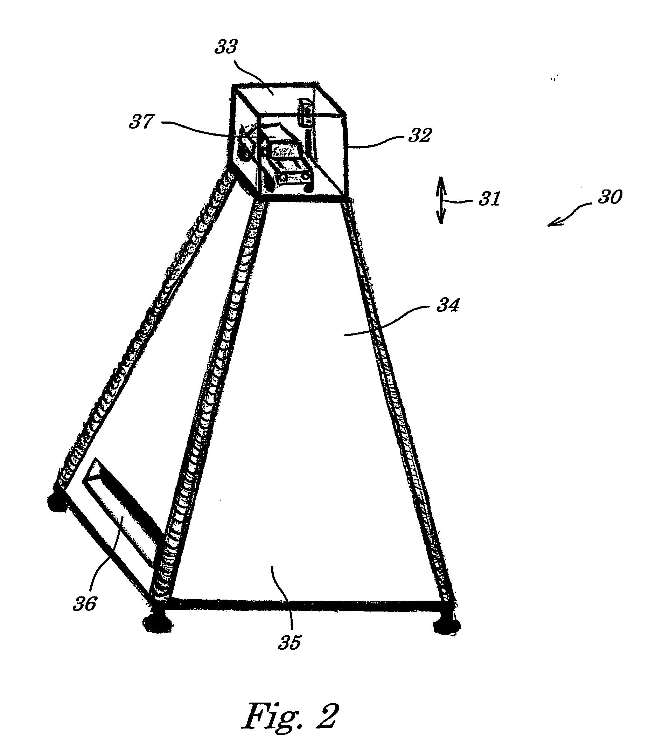

In Figur 2 ist eine mögliche praktische Realisierung der erfindungsgemäßen Vorrichtung als 3D-Monitor 30 in perspektivischer Darstellung gezeigt. Der optische Aufbau entspricht im wesentlichen der Darstellung der Figur 1. Während in Figur 1 die optische Achse horizontal verläuft, ist in der Ausführungsform der Figur 2 die optische Achse vertikal zum Boden orientiert, das heißt insbesondere, dass die hier nicht gesondert dargestellte Einheit aus beweglicher Fresnel-Linse und Streuschirm in der durch den Pfeil 31 symbolisierte vertikale Richtung oszilliert. Der Schwingungsbereich des Streuschirms in von einem transparenten Gehäuse 32 umgeben. Der Innenraum 33 des Gehäuses 32 ist auf einen Druck von wenigen mbar evakuiert, um den Luftwiderstand für die Fresnel-Linse und den Streuschirm sowie die Geräuschemissionen zu minimieren. Der übrige Teil der Vorrichtung sind durch undurchsichtiges Gehäuseblenden 34 abgedeckt. Das von außen nicht erkennbare LED-Array befindet sich im Bodenbereich 35 des 3D-Monitors 30. In der dargestellten Variante ist außerdem eine Anschlussöffnung 36 vorgesehen, über die beispielsweise Speicherkarten mit bereits aufgezeichneten Filmen eingesetzt und über einen internen Computer wiedergegeben werden können. Alternativ kann die Anschlussöffnung 36 auch eine Schnittstelle zur Verbindung mit einem externen Computer aufweisen.

In der Darstellung der Figur 2 erkennt man in dem transparenten Gehäuse 31 eine schematische dreidimensionale Alltagsszenerie 37 (ein Fahrzeug und eine Ampel), welche durch die erfindungsgemäße Vorrichtung animiert wiedergeben werden kann.

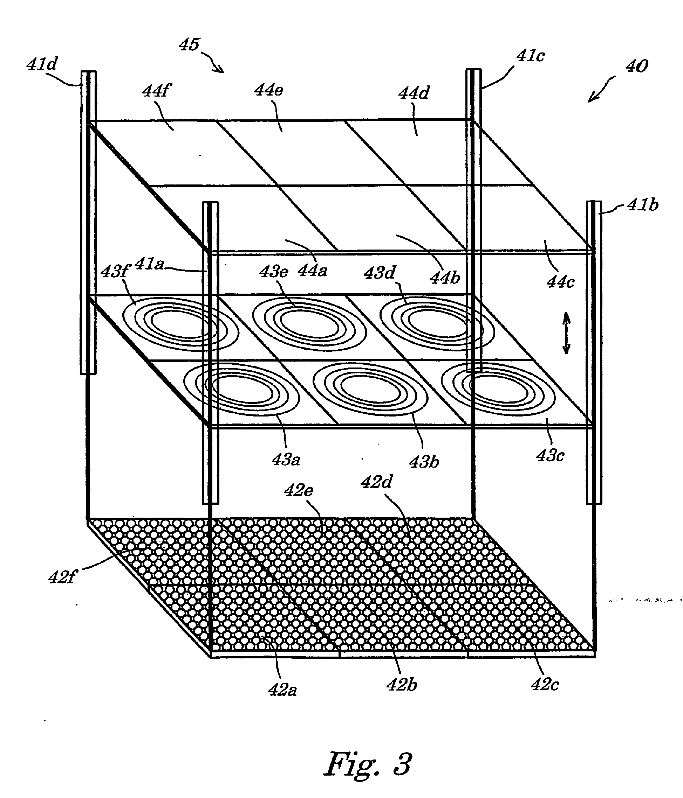

Figur 3 zeigt eine schematische Darstellung in der mehrere erfindungsgemäße Vorrichtungen, wie sie in Figur 1 näher beschrieben worden sind modulartig zu einem dreidimensionalen Großbildschirm 40 verbunden sind. Der Übersichtlichkeit halber wurden hier nur die äußeren Führungsstangen 41a-d dargestellt. In dieser Variante werden die LED-Arrays 42a-f über die Fresnel-Linsen 43a-f im Abbildungsmaßstab 1:1 auf die Streuschirme 44a-f projiziert. Die Streuschirme erzeugen insgesamt ein Großbild 45. Ein solcher Bildschirm kann mit zahlreichen Modulen realisiert werden und Abmessungen im Meterbereich erreichen.

## Patentansprüche

1. Verfahren zur dreidimensionalen Darstellung von Bildern, wobei man
eine Abfolge von zweidimensionalen Einzelbildern mittels eines zweidimensionalen Arrays (12) aus einzeln ansteuerbaren lichtemittierende Dioden (LEDs) erzeugt,
das von den LEDs des Arrays (12) ausgehende Licht auf eine Abbildungseinrichtung (15) bündelt,
das auf die Abbildungseinrichtung (15) auftreffende Licht mittels der Abbildungseinrichtung (15) auf einen Streuschirm (16) fokussiert,
wobei man die Abbildungseinrichtung (15) und den Streuschirm (16) miteinander gekoppelt und als Einheit in einer im wesentlichen senkrecht zu der Schirmebene liegenden Richtung periodisch reversierend bewegt, wobei man den Abstand zwischen dem Streuschirm (16) und der Abbildungseinrichtung (16) im wesentlichen konstant hält und die Abfolge der zweidimensionalen Einzelbilder (25,25a,25b) mit der räumlichen Position des Streuschirms (16) synchronisiert.

2. Verfahren gemäß Anspruch 1, **dadurch gekennzeichnet, dass** man die Intensität des auf den Streuschirm (16) projizierten Bildes (25,25a,25b) über die Betriebsstromstärke und/oder einstellbare zeitliche Aktiv/Inaktiv-Verhältnisse der LEDs regelt.

3. Verfahren gemäß einem der vorhergehenden Ansprüche , **dadurch gekennzeichnet, dass** man die Abfolge der zweidimensionalen Einzelbilder (25,25a,25b) aus den sichtbaren Oberflächendaten der darzustellenden dreidimensionalen Objekte errechnet.

4. Vorrichtung zur dreidimensionalen Darstellung von Bildern mit
Bilderzeugungsmitteln zur Erzeugung einer Abfolge von zweidimensionalen Ausgangsbildern (24) auf wenigstens einem LED-Array (12),
einer Abbildungseinrichtung (15) und einem Streuschirm (16), die eine gekoppelte, beweglichen Einheit (19) bilden, bei welcher der Abstand zwischen dem Streuschirm (16) und der Abbildungseinrichtung (15) im wesentlichen konstant ist,
Betätigungsmitteln (20,21) zur periodischen Hin- und Herbewegung der Einheit (19) in einer zu der Oberfläche des Streuschirms (16) im wesentlichen senkrechten Richtung,
Steuerungsmitteln (11) zur Synchronisation der Abfolge der zweidimensionalen Ausgangsbilder (24) mit der räumlichen Position des Streuschirms (16), und
Mitteln (26) zur Bündelung des von den LEDs des Arrays (12) ausgehenden Lichts auf die Abbildungseinrichtung (15), die ihrerseits das auf sie auftreffende Licht auf den Streuschirm (16) fokussiert.

5. Vorrichtung gemäß Anspruch 4, **dadurch gekennzeichnet, dass** das LED-Array (12) Ausgangsbilder (24) in wenigstens drei unterschiedlichen Wellenlängen erzeugt.

6. Vorrichtung gemäß Anspruch 5, **dadurch gekennzeichnet, dass** drei bei verschiedenen Wellenlängen arbeitende LED-Arrays (14) vorgesehen sind.

7. Vorrichtung gemäß Anspruch 6, **dadurch gekennzeichnet, dass** die von den drei LED-Arrays erzeugten Ausgangsbilder (24) über dichroitische Spiegel auf den Streuschirm projiziert werden.

8. Vorrichtung gemäß einem der Ansprüche 4 bis 7, **dadurch gekennzeichnet, dass** die Abbildungseinrichtung (15) eine Fresnel-Linse umfasst.

9. Vorrichtung gemäß einem der Ansprüche 4 bis 8, **dadurch gekennzeichnet, dass** die Mittel zur Bündelung des von den LEDs (14) des Arrays (12) ausgehenden Lichts eine jede LED umgebende transparente Kapsel umfassen, die ein im wesentlichen paralleles Strahlbündel erzeugt.

10. Vorrichtung gemäß Anspruch 9, **dadurch gekennzeichnet, dass** die gekapselten LEDs (14) zu der Abbildungseinrichtung (15) hin orientiert sind.

11. Vorrichtung gemäß Anspruch 9, **dadurch gekennzeichnet, dass** zwischen dem LED-Array (12) und der beweglichen Einheit (19) eine feststehende Sammeloptik, insbesondere eine Fresnellinse (26), angeordnet ist.

12. Vorrichtung gemäß einem der Ansprüche 4 bis 8, **dadurch gekennzeichnet, dass** die Mittel zur Bündelung des von den LEDs (14) des Arrays (12) ausgehenden Lichts ein Mikrolinsenarray umfassen, das unmittelbar vor dem LED-Array (12) angeordnet ist.

13. Vorrichtung gemäß einem der Ansprüche 4 bis 12, **dadurch gekennzeichnet, dass** die Einheit (19) in im wesentlichen vertikaler Richtung bewegt wird.

14. Vorrichtung gemäß einem der Ansprüche 4 bis 13, **dadurch gekennzeichnet, dass** die Einheit (19) mit gegengleich bewegten Ausgleichskörpern gekoppelt ist.

15. Vorrichtung gemäß einem der Ansprüche 4 bis 14, **dadurch gekennzeichnet, dass** der Streuschirm von einem Gehäuse (32) mit transparenten Wänden umgeben ist.

16. Vorrichtung gemäß Anspruch 15, **dadurch gekennzeichnet, dass** die Wände des Gehäuses mit Filterfolien versehen sind, die im sichtbaren Spektralbereich im wesentlichen nur für das von den LEDs erzeugte Licht transparent sind.

17. Vorrichtung gemäß einem der Ansprüche 15 oder 16, **dadurch gekennzeichnet, dass** das Gehäuse (32) die gesamte bewegliche Einheit (19) umgibt.

18. Vorrichtung gemäß Anspruch 17, **dadurch gekennzeichnet, dass** in dem Gehäuse (32) ein Unterdruck herrscht.

19. Abbildungssystem umfassend mehrere rasterartig angeordnete Vorrichtungen nach einem der Ansprüche 4 bis 18, die zusammen ein dreidimensionales Großbild (45) erzeugen.

## Claims

1. A method for three-dimensional display of images, in which
a sequence of two-dimensional individual images are produced by means of a two-dimensional array (12) of individually controllable light emitting diodes (LEDs),
which method focuses light emanating from the LEDs of the array (12) onto an imaging device (15)
which method further focuses light incident on the imaging device (15) by means of said imaging device (15) onto a diffusion screen (16),
the imaging device (15) and the diffusion screen (16), coupled to one another, being moved as a unit, in a periodically reversing fashion in the direction substantially perpendicular to the screen plane, while the distance between the diffusion screen (16) and the imaging device (15) being kept substantially constant, and the sequence of the two-dimensional individual images (25,25a,25b) being synchronized with the spatial position of the diffusion screen (16).

2. The method as claimed in claim 1, **characterized in that** the intensity of the image (25,25a,25b) projected onto the diffusion screen (16) is controlled via the operating current strength and/or adjustable temporal active/inactive ratios of the LEDs.

3. The method as claimed in one of the preceding claims, **characterized in that** the sequence of the two-dimensional individual (25,25a,25b) images is calculated from the visible surface data of the three-dimensional visible surface data that are to be displayed of the three-dimensional objects that are to be displayed.

4. Apparatus for three-dimensional display of images, having
image producing means for producing a sequence of two-dimensional output images (24) on at least one LED array (12),
an imaging device (15) and a diffusion screen (16), that form a coupled, movable unit (19) with the distance between the diffusion screen (16) and the imaging device (15) being substantially constant,
actuating means (20, 21) for periodically moving the unit (19) to and fro in a direction substantially perpendicular to the surface of the diffusion screen (16),
control means (11) for synchronizing the sequence of the two-dimensional output images (24) with the spatial position of the diffusion screen (16), and
means for focusing the light emanating from the LEDs of the array (12) onto the imaging device (15) that, for its part, focuses the light incident on it onto the diffusion screen (16).

5. The apparatus as claimed in claim 4, **characterized in that** the LED array (12) produces output images (24) at at least three different wavelengths.

6. The apparatus as claimed in claim 5, **characterized in that** three LED arrays (14) operating at various wavelengths are provided.

7. The apparatus as claimed in claim 6, **characterized in that** the output images (24) produced by the three LED arrays are projected onto the diffusion screen via dichroic mirrors.

8. The apparatus as claimed in one of claims 4 to 7, **characterized in that** the imaging device (15) comprises a Fresnel lens.

9. The apparatus as claimed in one of claims 4 to 8, **characterized in that** the means for focusing the light emanating from the LEDs (14) of the array (12) comprise a transparent capsule that surrounds each LED and produces a substantially parallel beam.

10. The apparatus as claimed in claim 9, **characterized in that** the encapsulated LEDs (14) are oriented toward the imaging device (15).

11. The apparatus as claimed in claim 9, **characterized in that** a fixed collecting optic, in particular a Fresnel lens (26), is arranged between the LED array (12) and the movable unit (19).

12. The apparatus as claimed in one of claims 4 to 8, **characterized in that** the means for focusing the light emanating from the LEDs (14) of the array (12) comprise a microlens array that is arranged directly upstream of the LED array (12).

13. The apparatus as claimed in one of claims 4 to 12, **characterized in that** the unit (19) is moved in a substantially vertical direction.

14. The apparatus as claimed in one of claims 4 to 13, **characterized in that** the unit (19) is coupled to compensating bodies moved in direct opposition.

15. The apparatus as claimed in one of claims 4 to 14, **characterized in that** the diffusion screen is surrounded by a housing (32) with transparent walls.

16. The apparatus as claimed in claim 15, **characterized in that** the walls of the housing are provided with filter foils that are transparent in the visible spectral region substantially only for the light produced by the LEDs.

17. The apparatus as claimed in one of claims 15 or 16, **characterized in that** the housing (32) surrounds the entire movable unit (19).

18. The apparatus as claimed in claim 17, **characterized in that** an underpressure prevails in the housing (32).

19. An imaging system comprising a number of apparatuses, arranged in grid fashion, as claimed in one of claims 4 to 18, that together produce a large three-dimensional image (45).

## Revendications

1. Procédé pour représenter en trois dimensions des images, sachant
qu'on produit une séquence d'images individuelles à deux dimensions au moyen d'un agencement bidimensionnel (12) de diodes électroluminescentes (DEL) individuellement activables,
qu'on concentre sur un dispositif de projection (15) la lumière provenant des DEL de l'agencement (12),
qu'on focalise sur un écran diffuseur (16), au moyen du dispositif de projection (15), la lumière qui arrive sur le dispositif de projection (15),
sachant qu'on couple entre eux le dispositif de projection (15) et l'écran diffuseur (16) et qu'on les déplace comme un ensemble, avec inversion périodique du sens de déplacement, dans une direction sensiblement perpendiculaire au plan de l'écran, sachant qu'on maintient sensiblement constante la distance entre l'écran diffuseur (16) et le dispositif de projection (15) et qu'on synchronise la séquence d'images individuelles à deux dimensions (25, 25a, 25b) avec la position spatiale de l'écran diffuseur (16).

2. Procédé selon la revendication 1, **caractérisé en ce qu'**on régule l'intensité de l'image (25, 25a, 25b) projetée sur l'écran diffuseur (16) au moyen de l'intensité du courant de fonctionnement et/ou de ratios réglables de temps d'activité/inactivité des DEL.

3. Procédé selon l'une des revendications précédentes, **caractérisé en ce qu'**on calcule la séquence d'images individuelles à deux dimensions (25, 25a, 25b) à partir des données de surface visibles des objets à trois dimensions à représenter.

4. Dispositif pour représenter en trois dimensions des images, avec
des moyens de production d'images, pour produire une séquence d'images initiales à deux dimensions (24) sur au moins un agencement de DEL (12),
un dispositif de projection (15) et un écran diffuseur (16) qui forment une unité couplée mobile (19) dans laquelle la distance entre l'écran diffuseur (16) et le dispositif de projection (15) est sensiblement constante,
des moyens d'actionnement (20, 21) pour le déplacement périodique en va-et-vient de l'unité (19) dans une direction sensiblement perpendiculaire à la surface de l'écran diffuseur (16),
des moyens de commande (11) pour synchroniser la séquence d'images initiales à deux dimensions (24) avec la position spatiale de l'écran diffuseur (16), et
des moyens (26) pour concentrer la lumière provenant des DEL de l'agencement (12) sur le dispositif de projection (15), qui focalise lui-même sur l'écran diffuseur (16) la lumière arrivant sur lui.

5. Dispositif selon la revendication 4, **caractérisé en ce que** l'agencement de DEL (12) produit des images initiales (24) dans au moins trois longueurs d'onde différentes.

6. Dispositif selon la revendication 5, **caractérisé en ce qu'**il est prévu trois agencements de DEL (14), travaillant à des longueurs d'onde différentes.

7. Dispositif selon la revendication 6, **caractérisé en ce que** les images initiales (24) produites par les trois agencements de DEL sont projetées sur l'écran diffuseur par l'intermédiaire de réflecteurs dichroïques.

8. Dispositif selon l'une des revendications 4 à 7, **caractérisé en ce que** le dispositif de projection (15) comprend une lentille de Fresnel.

9. Dispositif selon l'une des revendications 4 à 8, **caractérisé en ce que** les moyens pour concentrer la lumière provenant des DEL (14) de l'agencement (12) comprennent une capsule transparente qui entoure chaque DEL et produit un faisceau de rayons sensiblement parallèles.

10. Dispositif selon la revendication 9, **caractérisé en ce que** les DEL encapsulées (14) sont orientées en direction du dispositif de projection (15).

11. Dispositif selon la revendication 9, **caractérisé en ce qu'**une optique collectrice fixe, en particulier une lentille de Fresnel (26), est disposée entre l'agencement de DEL (12) et l'unité mobile (19).

12. Dispositif selon l'une des revendications 4 à 8, **caractérisé en ce que** les moyens pour concentrer la lumière provenant des DEL (14) de l'agencement (12) comprennent un agencement de microlentilles qui est disposé juste devant l'agencement de DEL (12).

13. Dispositif selon l'une des revendications 4 à 12, **caractérisé en ce que** l'unité (19) est déplacée en direction sensiblement verticale.

14. Dispositif selon l'une des revendications 4 à 13, **caractérisé en ce que** l'unité (19) est couplée à des corps de compensation déplacés de manière diamétralement opposée.

15. Dispositif selon l'une des revendications 4 à 14, **caractérisé en ce que** l'écran diffuseur est entouré par un boîtier (32) à parois transparentes.

16. Dispositif selon la revendication 15, **caractérisé en ce que** les parois du boîtier sont pourvues de feuilles de filtrage qui, dans la plage spectrale visible, sont transparentes sensiblement uniquement pour la lumière produite par les DEL.

17. Dispositif selon l'une des revendications 15 ou 16, **caractérisé en ce que** le boîtier (32) entoure la totalité de l'unité mobile (19).

18. Dispositif selon la revendication 17, **caractérisé en ce qu'**une dépression règne dans le boîtier (32).

19. Système de projection comprenant plusieurs dispositifs selon l'une des revendications 4 à 18 disposés en quadrillage, qui produisent ensemble une image à trois dimensions de grande taille (45).
